# EUROPÄISCHE PATENTSCHRIFT

(11) **EP 2 804 886 B1**
(45) Veröffentlichungstag und Bekanntmachung des Hinweises auf die Patenterteilung: **16.03.2016**
(21) Anmeldenummer: 12809181.6
(22) Anmeldetag: 13.12.2012
(51) Int. Cl.: C08G 18/36, C08G 18/40, C08G 18/42, C08G 18/48

(54) **VERFAHREN ZUR HERSTELLUNG VON POLYURETHAN-HARTSCHÄUMEN**
METHOD FOR MANUFACTURING POLYURETHANE SOLID FOAMS
PROCÉDÉ DESTINÉ À LA FABRICATION DE MOUSSES RIGIDES DE POLYURÉTHANE

(30) Priorität: 18.01.2012 EP 12151577
(43) Veröffentlichungstag der Anmeldung: 26.11.2014
(73) Patentinhaber: BASF SE, 67056 Ludwigshafen (DE)
(72) Erfinder: KAMPF, Gunnar, 32351 Stemwede-Haldem (DE)
(86) Internationale Anmeldenummer: PCT/EP2012/075350
(87) Internationale Veröffentlichungsnummer: WO 2013/107573

(56) Entgegenhaltungen:
- WO-A1-2008/058920
- WO-A1-2010/015642
- DE-A1- 4 129 285
- US-A- 3 138 562
- US-A- 3 399 154

## Beschreibung

Die vorliegende Erfindung betrifft ein Verfahren zur Herstellung von Polyurethan-Hartschaumstoffen oder Polyisocyanurat-Hartschaumstoffen unter Verwendung von bestimmten Polyetheresterpolyolen B) auf Basis aromatischer Dicarbonsäuren, gegebenenfalls weiteren Polyesterpolyolen C), die sich von denen der Komponente B) unterscheiden, und Polyetherpolyolen D), wobei das Massenverhältnis der Summe der Komponenten B) und gegebenenfalls C) zu Komponente D) kleiner 1,6 ist. Die vorliegende Erfindung betrifft außerdem die so erhältlichen Hartschaumstoffe sowie deren Verwendung zur Herstellung von Sandwichelementen mit starren oder flexiblen Deckschichten. Darüber hinaus richtet sich die vorliegende Erfindung auf die zugrundeliegenden Polyolkomponenten.

Die Herstellung von Polyurethan-Hartschaumstoffen durch Umsetzung von Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Es ist aus dem Stand der Technik insbesondere bekannt, Polyesterpolyole einzusetzen, die als Polykondensate aus aromatischen und/oder aliphatischen Dicarbonsäuren und Alkandiolen und/oder -triolen bzw. Etherdiolen erhalten werden. WO 2010/115532 A1 beschreibt die Herstellung von Polyesterpolyolen aus Terephthalsäure und Oligoalkylenoxiden, wodurch Produkte mit verbesserter Flammwidrigkeit erhalten werden sollen. Nach der Lehre dieses Dokuments werden keine Fettsäuren oder Fettsäurederivate eingesetzt. Als Starter werden niedrigfunktionelle Alkohole eingesetzt.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da infolgedessen die Viskosität der Abmischungen mit den Polyestern ansteigt und dadurch die Vermischung der Polyolkomponente mit dem Isocyanat deutlich erschwert wird.

Zudem kann es in bestimmten Systemen zur Herstellung von PU-Hartschaumstoffen, zum Beispiel unter Verwendung von Glycerin als höherfunktionelle alkoholische Polyester-Komponente, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Auch ist das Problem des Verhaltens von PU-Hartschaumstoffen im Brandfall bisher nicht für alle Systeme befriedigend gelöst. Beispielsweise kann sich beim Einsatz von Trimethylolpropan (TMP) als höherfunktionelle alkoholische Polyester-Komponente im Brandfall eine toxische Verbindung bilden.

Ein generelles Problem bei der Herstellung von PU-Hartschaumstoffen ist die Ausbildung von Oberflächendefekten, insbesondere an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solche Oberflächendefekte und führt somit zu einer optischen Verbesserung der Oberfläche von Sandwichelementen.

PU-Hartschaumstoffe zeigen zudem häufig eine hohe Sprödigkeit, was sich beim Zuschnitt der Schäume entweder durch eine starke Staubentwicklung und hohe Empfindlichkeit des Schaums zeigt, oder im Falle des Sägens des Schaumstoffs, vor allem beim Sägen von Verbundelementen mit metallischen Deckschichten und einem Kern aus einem Polyurethan- oder Polyisocyanuratschaum, zur Rissbildung im Schaum führen kann.

Ferner ist es allgemein wünschenswert, Systeme mit einer möglichst hohen Eigenreaktivität bereitzustellen, um den Einsatz von Katalysatoren zu minimieren.

Das Dokument DE 41 29 285 A1 offenbart ein Verfahren zur Herstellung von Polyurethan-Hartschaumstoffen mit geringer Sprödigkeit. Im Beispiel Polyol A wird die Herstellung eines Schaums beschrieben: Aus 29 g eines Polyesterpolyols auf Basis Phthalsäureanhydrid/Adipinsäure/Ölsäure/ Trimethylolpropan, 20 g eines Polyesterpolyols auf Basis Phthalsäureanhydrid/Adipinsäure/Glyzerin/ Propylenglykol und 24 g eines Polyetherols wird zuerst eine Polyolkomponente hergestellt.

Aus dem Stand der Technik bekannte PU-Hartschaumstoffe bzw. deren (Aufbau-)Komponenten sind bezüglich ihres Eigenschaftsprofils aus den vorgenannten Eigenschaften nicht in allen Aspekten befriedigend. Aufgabe der vorliegenden Erfindung war es, das Eigenschaftsprofil aus den vorgenannten Eigenschaften zu verbessern.

Aufgabe der Erfindung war es insbesondere, PU-Hartschaumstoffe mit geringer Sprödigkeit bereitzustellen. Aufgabe der Erfindung war es weiterhin, eine Polyolkomponente bereitzustellen, welche eine hohe Eigenreaktivität aufweist.

Darüber hinaus sollten die verwendeten Komponenten und die daraus hergestellten Abmischungen eine niedrige Viskosität aufweisen, um bei der Herstellung der PU-Hartschaumstoffe gut dosiert und vermischt werden zu können. Auch die Löslichkeit von Treibmitteln, zum Beispiel von Pentan in der Polyolkomponente, sollte möglichst gut sein.

Eine weitere Aufgabe war, die Maßhaltigkeit der PU-Hartschaumstoffe zu verbessern. Die Bildung von toxischen Verbindungen im Brandfall sollte möglichst gering sein. Weiterhin sollte die Ausbildung von Oberflächendefekten vermindert werden.

Hinsichtlich der Auswahl der (Aufbau-)Komponenten sollten die verwendeten Einsatzstoffe mit möglichst geringem Aufwand (also u.a. mit möglichst wenig Aufarbeitungs- und Reinigungsschritten) hergestellt werden können.

Gelöst wird die Aufgabe durch ein Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von
   b1) 10 bis 70 Mol-% einer Dicarbonsäurezusammensetzung, enthaltend
      b11) 50 bis 100 Mol-%, bezogen auf die Dicarbonsäurezusammensetzung, einer oder mehrerer aromatischer Dicarbonsäuren oder Derivate derselben,
      b12) 0 bis 50 Mol-%, bezogen auf die Dicarbonsäurezusammensetzung , einer oder mehrerer aliphatischer Dicarbonsäuren oder Derivate derselben,
   b2) 2 bis 30 Mol-% einer oder mehrerer Fettsäuren und/oder Fettsäurederivate,
   b3) 10 bis 70 Mol-% eines oder mehrerer aliphatischer oder cycloaliphatischer Diole mit 2 bis 18 C-Atomen oder Alkoxylate derselben,
   b4) 2 bis 50 Mol-% eines Polyetherpolyols mit einer Funktionalität größer oder gleich 2, hergestellt durch Alkoxylierung eines Polyols mit einer Funktionalität größer 2, jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unter scheiden,
D) Polyetherpolyolen,
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) kleiner 1,6 ist.

Gegenstand der vorliegenden Erfindung ist außerdem eine Polyolkomponente enthaltend die vorgenannten Komponenten B) bis H), wobei das Massenverhältnis der Summe der Komponenten B) und gegebenenfalls C) zu Komponente D) kleiner 1,6 ist.

Weitere Gegenstände der vorliegenden Erfindung sind Polyurethan-Hartschaumstoffe und Polyisocyanurat-Hartschaumstoffe, erhältlich nach dem erfindungsgemäßen Verfahren sowie deren Verwendung zur Herstellung von Sandwich-Elementen mit starren oder flexiblen Deckschichten.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis H) der vorliegenden Erfindung. Die nachfolgend im Rahmen von Komponente B) bis H) aufgeführten Ausführungsformen beziehen sich sowohl auf das erfindungsgemäße Verfahren und die so erhältlichen Hartschaumstoffe als auch auf die erfindungsgemäßen Polyolkomponenten.

### Komponente B

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Vorzugsweise enthält die Komponente b11) mindestens eine Verbindung, die aus der Gruppe bestehend aus Terephthalsäure, Dimethylterephthalat (DMT), Polyethylenterephthalat (PET), Phthalsäure, Phthalsäureanhydrid (PSA) und Isophthalsäure ausgewählt wird. Besonders bevorzugt enthält die Komponente b11) mindestens eine Verbindung aus der Gruppe bestehend aus Terephthalsäure, Dimethylterephthalat (DMT), Polyethylenterephthalat (PET) und Phthalsäureanhydrid (PSA). Ganz besonders bevorzugt enthält die Komponente b11) Phthalsäureanhydrid, Dimethylterephthalat (DMT), Terephthalsäure oder Gemische daraus. Die aromatischenDicarbonsäuren oder deren Derivate der Komponente b11) werden besonders bevorzugt aus den vorgenannten aromatischen Dicarbonsäuren bzw. Dicarbonsäurederivaten und im speziellen aus Terephthalsäure und/oder Dimethylterephthalat (DMT) ausgewählt. Terephthalsäure und/oder DMT in Komponente b11) führt zu Polyetherestern B) mit besonders guten Brandschutzeigenschaften. Terephthalsäure ist dabei ganz besonders bevorzugt, da im Gegensatz zu DMT die Entstehung von störenden Abspaltungsprodukten vermieden werden kann.

Im Allgemeinen sind aliphatische Dicarbonsäuren oder-derivate (Komponente b12) zu 0 bis 30 Mol-%, bevorzugt 0 bis 10 Mol-% in der Dicarbonsäurezusammensetzung b1) enthalten. Besonders bevorzugt enthält die Dicarbonsäurezusammensetzung b1) keine aliphatischen Dicarbonsäuren oder Derivate derselben und besteht somit zu 100 Mol-% aus einer oder mehreren aromatischen Dicarbonsäuren oder deren Derivate, wobei die vorgenannten bevorzugt sind.

Vorzugsweise wird die Komponente b2) in Mengen von 3 bis 20 Mol-%, besonders bevorzugt 5 bis 18 Mol-% eingesetzt.

Vorzugsweise wird die Komponente b3) in Mengen von 20 bis 60 Mol-%, bevorzugt von 25 bis 55 Mol-%, besonders bevorzugt von 30 bis 45 Mol-% eingesetzt.

Vorzugsweise wird die Komponente b4) in Mengen von 2 bis 40 Mol-%, bevorzugt 2 bis 35 Mol-%, besonders bevorzugt 15 bis 25 Mol-% eingesetzt.

In einer Ausführungsform der Erfindung besteht die Fettsäure oder das Fettsäurederivat b2) aus einer Fettsäure bzw. Fettsäuremischung, einem oder mehreren Glycerin-Estern von Fettsäuren, bzw. von Fettsäuremischungen und/oder einem oder mehreren Fettsäuremonoestern, wie beispielsweise Biodiesel oder Methylestern von Fettsäuren, besonders bevorzugt besteht die Komponente b2) aus einer Fettsäure bzw. Fettsäuremischung und/oder einem oder mehreren Fettsäuremonoestern, spezifischer besteht die Komponente b2) aus einer Fettsäure bzw. Fettsäuremischung und/oder Biodiesel und im speziellen besteht die Komponente b2) aus einer Fettsäure bzw. Fettsäuremischung.

In einer bevorzugten Ausführungsform der Erfindung ist die Fettsäure oder das Fettsäurederivat b2) ausgewählt aus der Gruppe bestehend aus Rizinusöl, Polyhydroxyfettsäuren, Ricinolsäure, Stearinsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren, Biodiesel, Methylestern von Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure sowie Mischfettsäuren.

In einer besonders bevorzugten Ausführungsform der vorliegenden Erfindung ist die Fettsäure oder das Fettsäurederivat b2) Ölsäure, Biodiesel, Sojaöl, Rapsöl oder Talg, besonders bevorzugt Ölsäure, Biodiesel, Sojaöl, Rapsöl oder Rindertalg, spezifischer Ölsäure oder Biodiesel und im speziellen Ölsäure. Die Fettsäure oder das Fettsäurederivat verbessert unter anderem die Treibmittellöslichkeit bei der Herstellung von Polyurethanhartschaumstoffen.

Ganz besonders bevorzugt umfasst Komponente b2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst sowie Alkylmonoester von Fettsäuren oder Alkylmonoester von Fettsäuregemischen, insbesondere die Fettsäuren selbst und/oder Biodiesel.

Vorzugsweise ist das aliphatische oder cycloaliphatische Diol b3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b3) Monoethylenglykol oder Diethylenglykol, insbesondere Diethylenglykol.

Vorzugsweise wird ein solches Polyetherpolyol b4) mit einer Funktionalität größer 2 eingesetzt, das durch Alkoxylierung eines Polyols mit einer Funktionalität größer oder gleich 3 hergestellt wurde.

Erfindungsgemäß weist das Polyetherpolyol b4) eine Funktionalität von größer als 2 auf. Vorzugsweise weist es eine Funktionalität größer oder gleich 2,7, insbesondere größer oder gleich 2,9 auf. Im Allgemeinen weist es eine Funktionalität von kleiner oder gleich 6, bevorzugt kleiner oder gleich 5, besonders bevorzugt kleiner oder gleich 4 auf.

In einer Ausführungsform der vorliegenden Erfindung ist das Polyetherpolyol b4) erhältlich durch Umsetzung eines Polyols mit einer Funktionalität von größer als 2 mit Ethylenoxid und/ oder Propylenoxid, bevorzugt mit Ethylenoxid.

In einer weiteren bevorzugten Ausführungsform ist das Polyetherpolyol b4) erhältlich durch Alkoxylierung eines Polyols, ausgewählt aus der Gruppe bestehend aus Sorbit, Pentaerythrit, Trimethylolpropan, Glycerin, Polyglycerin und deren Gemischen.

In einer besonders bevorzugten Ausführungsform ist das Polyetherpolyol b4) erhältlich durch Alkoxylierung mit Ethylenoxid, was zu Polyurethan-Hartschaumstoffen mit verbesserten Brandschutzeigenschaften führt.

In einer bevorzugten Ausführungsform der vorliegenden Erfindung wird die Komponente b4) durch anionische Polymerisation von Propylenoxid oder Ethylenoxid, bevorzugt Ethylenoxid, in Gegenwart von Alkoxylierungs-Katalysatoren wie Alkalihydroxiden, wie Natrium- oder Kaliumhydroxid, oder Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und Imidazolderivate sowie Mischungen daraus, unter Verwendung mindestens eines Startermoleküls hergestellt. Bevorzugte Alkoxylierungskatalysatoren sind dabei KOH und aminische Alkoxylierungs-Katalysatoren. Da bei Verwendung von KOH als Alkoxylierungs-Katalysator der Polyether zunächst neutralisiert werden muss und das entstehende Kaliumsalz abgetrennt werden muss, bevor der Polyether als Komponente b4) in der Veresterung eingesetzt werden kann, ist die Verwendung von aminischen Alkoxylierungs-Katalysatoren bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

In einer speziellen Ausführungsform der Erfindung besteht das Polyetherpolyol b4) aus dem Umsetzungsprodukt von Glycerin mit Ethylenoxid und/ oder Propylenoxid, bevorzugt mit Ethylenoxid. Hierdurch ergibt sich eine besonders hohe Lagerstabilität der Komponente B).

In einer weiteren speziellen Ausführungsform der Erfindung besteht das Polyetherpolyol b4) aus dem Umsetzungsprodukt von Trimethylolpropan mit Ethylenoxid und/oder Proplyenoxid, bevorzugt mit Ethylenoxid. Hierdurch ergibt sich ebenfalls eine besonders hohe verbesserte Lagerstabilität der Komponente B).

Vorzugsweise weist das Polyetherpolyol b4) eine OH-Zahl im Bereich von 150 bis 1250 mg KOH/g, bevorzugt 300 bis 950 mg KOH/g, besonders bevorzugt 500 bis 800 mg KOH/g auf.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 650 mg KOH/g liegt und KOH oder Imidazol bevorzugt Imidazol als Alkoxylierungskatalysator Verwendung findet.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpoyols b4) im Bereich von 500 bis 650 mg KOH/g liegt, Imidazol als Alkoxylierungskatalysator Verwendung findet, und das aliphatische oder cycloaliphatische Diol b3) ist Diethylenglykol, und die Fettsäure oder das Fettsäurederivat ist Ölsäure.

Vorzugsweise werden pro kg Polyetheresterpolyol B) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b4) verwendet.

Vorzugsweise weist das Polyetheresterpolyol B) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyetheresterpolyole können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyetheresterpolyole werden die organischen Polycarbonsäuren und/oder -derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyesterpolyole weisen im Allgemeinen ein zahlenmittleres Molekulargewicht von 300 bis 3000, vorzugsweise 400 bis 1000 und insbesondere 450 bis 800 auf.

Im Allgemeinen ist der Anteil der erfindungsgemäßen Polyetheresterpolyole B) mindestens 10 Gew.-%, bevorzugt mindestens 20 Gew.-%, besonders bevorzugt mindestens 25 Gew.-%, bezogen auf die Summe der Komponenten B) bis H).

Zur Herstellung der Polyurethan-Hartschaumstoffe nach dem erfindungsgemäßen Verfahren finden, neben den oben beschriebenen speziellen Polyesterpolyolen, die an sich bekannten Aufbaukomponenten Verwendung, zu denen im Einzelnen folgendes auszuführen ist.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4-und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'-und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDIbasierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

### Komponente C

Geeignete Polyesterpolyole C), die sich von den Polyesterpolyolen B) unterscheiden, können aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen, hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride, eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Im Allgemeinen beträgt das Massenverhältnis der Polyetheresterpolyole B) zu den Polyesterpolyole C) mindestens 0,1, bevorzugt mindestens 0,25, besonders bevorzugt mindestens 0,5 und insbesondere mindestens 0,8. Bevorzugt beträgt der Anteil der Polyetheresterpolyole B) an der Gesamtmenge der Polyesterpolyole B) und C) mindestens 25 Gew.-%, bevorzugt mindestens 50 Gew.-%, besonders bevorzugt mindestens 75 Gew.-%, insbesondere 100 Gew.-%. Besonders bevorzugt werden keine weiteren Polyesterpolyole C) mit umgesetzt.

### Komponente D

Erfindungsgemäß werden Polyetherpolyole D) zur Herstellung der PU-Hartschaumstoffe verwendet. Die Polyetherpolyole D) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren wie Dimethylethanolamin (DMEOA), Imidazol oder Imidazolderivate unter Verwendung mindestens eines Startermoleküls oder Startermolekülgemisches, das im Mittel 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole (auch "Starter" genannt), wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose. Besonders bevorzugt ist die Verwendung eines Startergemisches aus Saccharose und DEG oder Saccharose und Glycerin, speziell Saccharose und Glycerin.

Die Polyetherpolyole D), vorzugsweise Polyoxypropylenpolyole und Polyoxyethylenpolyole, besitzen eine Funktionalität von vorzugsweise 2 bis 6 und insbesondere 2 bis 5 und zahlenmittlere Molekulargewichte von 150 bis 3000, vorzugsweise 200 bis 2000 und insbesondere 250 bis 1000.

In einer bevorzugten Ausführungsform der Erfindung wird ein alkoxyliertes Diol, bevorzugt ein ethoxyliertes Diol, vorzugsweise Polyethylenglykol, als ein Teil der Polyetherpolyol D) mitverwendet.

In einer bevorzugten Ausführungsform der Erfindung besteht die Polyetherolkomponente D) aus einem Polyether-Gemisch, in der ein Teil der Polyetherolkomponente D) auf Basis von Propylenoxid hergestellt wurde (Polyetherolkomponente D1) und der restliche Teil der Polyetherolkomponente D) auf Basis von Ethylenoxid hergestellt wurde (Polyetherolkomponente D2).

In einer bevorzugten Ausführungsform der Erfindung weist die Polyetherolkomponente D1) eine mittlere OH-Funktionalität von größer 3, bevorzugt größer 3,5, besonders bevorzugt größer 4 und eine OH-Zahl größer 300 mg KOH/g bevorzugt größer 350 mg KOH/g, besonders bevorzugt größer 400 mg KOH/g und speziell größer 450 mg KOH/g auf.

In einer bevorzugten Ausführungsform der Erfindung weist die Polyetherolkomponente D1) eine mittlere OH-Funktionalität von kleiner 6, bevorzugt kleiner 5,5, besonders bevorzugt kleiner 5 und eine OH-Zahl kleiner 600 mg KOH/g bevorzugt kleiner 550 mg KOH/g, besonders bevorzugt kleiner 500 mg KOH/g auf.

In einer bevorzugten Ausführungsform der Erfindung liegt der Anteil der Polyetherolkomponente D1) an der Gesamtmenge der Polyetherolkomponente (D) größer 65 Gew.-%, bevorzugt größer 70 Gew.-%, besonders bevorzugt größer 75 Gew.-%, insbesondere größer 80 Gew.-% und im speziellen größer 85 Gew.-%.

In einer bevorzugten Ausführungsform der Erfindung basiert die Polyetherolkomponente D1) nicht auf Sorbitol.

In einer bevorzugten Ausführungsform der Erfindung basiert die Polyetherolkomponente D1) auf einem Polyether hergestellt aus Propylenoxid und einem Startergemisch aus Saccharose und Glycerin oder Saccharose und DEG, vorzugsweise Saccharose und Glycerin.

In einer bevorzugten Ausführungsform der Erfindung basiert die Polyetherolkomponente D2) auf einem Polyetherol auf Basis von Ethylenoxid mit einer mittleren OH-Funktionalität kleiner oder gleich 3, bevorzugt ist die Funktionalität der Polyetherolkomponente D2) gleich 2 und die OH-Zahl der Polyetherolkomponente D2) kleiner 400 mg KOH/g, bevorzugt kleiner 300 mg KOH/g, besonders bevorzugt kleiner 200 mg KOH/g.

In einer besonders bevorzugten Ausführungsform der Erfindung besteht die Polyetherolkomponente D) aus zwei Polyethern, einem Polyether (Polyetherolkomponente D1) auf Basis von Propylenoxid und eines Startergemisches aus Saccharose und Glycerin mit einer mittleren OH-Funktionalität von größer 4 und kleiner 5 und einer OH-Zahl von größer 450 mg KOH/g und kleiner 500 mg KOH/g sowie einem Polyethylenglykol mit einer OH-Zahl kleiner 200 mg KOH/g (Polyetherolkomponente D2).

Im Allgemeinen beträgt der Anteil der Polyetherpolyole D) 25 bis 55 Gew.-%, bevorzugt 29 bis 45 Gew.-%, besonders bevorzugt 31 bis 43 Gew.-%, spezifischer 33 bis 42 Gew.-% und insbesondere 35 bis 40 Gew.-%, bezogen auf die Summe der Komponenten B) bis H).

Erfindungsgemäß ist das Massenverhältnis der Summe der Komponenten B) und C) zu der Komponente D) kleiner als 1,6, insbesondere kleiner 1,5 oder 1,4, bevorzugt kleiner als 1,3, besonders bevorzugt kleiner als 1,2, insbesondere bevorzugt kleiner als 1,1, speziell bevorzugt kleiner als 1 und ganz besonders bevorzugt kleiner als 0,8.

Weiterhin ist das erfindungsgemäße Massenverhältnis der Summe der Komponenten B) und C) zu der Komponente D) größer als 0,1, insbesondere größer als 0,2, bevorzugt größer als 0,4, besonders bevorzugt größer als 0,5, ganz besonders bevorzugt größer als 0,6.

### Komponente E

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)-phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK, insbesondere TCPP.

Im Allgemeinen beträgt der Anteil des Flammschutzmittels E), 10 bis 40 Gew.-%, bevorzugt 15 bis 30 Gew.-%, besonders bevorzugt 20 bis 25 Gew.-%, bezogen auf die Komponenten B) bis H).

### Komponente F

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine Ameisensäure und keine halogenierten Kohlenwasserstoffe als Treibmittel verwendet. Vorzugsweise Verwendung finden Wasser, alle Pentanisomere, sowie Gemische aus Wasser und Pentanisomeren.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 30 Gew.-%, vorzugsweise 3 bis 15 Gew.-%, besonders bevorzugt 5 bis 10 Gew.-%, jeweils bezogen auf die Summe der Komponenten B) bis H).

Dient Wasser als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Wasserzusatz kann in Kombination mit dem Einsatz der anderen beschriebenen Treibmittel erfolgen. Bevorzugt wird Wasser in Kombination mit Pentan eingesetzt.

### Komponente G

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

In einer bevorzugten Ausführungsform der Erfindung besteht ein Teil der Komponente G) aus einem Carboxylat-Salz, speziell einem Alkalimetallcarboxylat.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis H), zugegeben, wobei jedoch der Gehalt an Matten, Vliesen und Geweben aus natürlichen und synthetischen Fasern Werte bis 80 Gew.-%, bezogen auf das Gewicht der Komponenten A) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Gegenstand der vorliegenden Erfindung ist eine Polyolkomponente enthaltend:
10 bis 50 Gew.-% der Polyetheresterpolyole B),
0 bis 30 Gew.-% der weiteren Polyesterpoylole C),
25 bis 55 Gew.-% der Polyetherpolyole D),
10 bis 40 Gew.-% Flammschutzmittel E),
1 bis 30 Gew.-% Treibmittel F),
0,5 bis 10 Gew.-% Katalysatoren G), und
0 bis 20 Gew.-%, insbesondere 0,5 bis 20 Gew.-%, weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, wobei das Massenverhältnis der Summe der Komponenten B) und C) zu Komponente D) kleiner 1,6 ist.

Besonders bevorzugt enthält die Polyolkomponente
25 bis 40 Gew.-% der Polyetheresterpolyole B),
0 Gew.-% der weiteren Polyesterpoylole C),
29 bis 45 Gew.-% der Polyetherpolyole D),
15 bis 30 Gew.-% Flammschutzmittel E),
3 bis 15 Gew.-% Treibmittel F),
0,5 bis 10 Gew.-% Katalysatoren G)
0,5 bis 5 Gew.-% weitere Hilfs- und Zusatzstoffe H)
jeweils wie vorstehend definiert und jeweils bezogen auf das Gesamtgewicht der Komponenten B) bis H), wobei sich die Gew.-% zu 100 Gew.-% ergänzen, wobei das Massenverhältnis der Summe der Komponenten B) und C) zu Komponente D) kleiner 1,3 ist.

Das Massenverhältnis der Summe der Komponenten B) und C) zu Komponente D) ist in den erfindungsgemäßen Polyolkomponenten vorzugsweise größer als 0,1; insbesondere größer als 0,2, bevorzugt größer als 0,4, besonders bevorzugt größer als 0,5 und ganz besonders bevorzugt größer als 0,6.

Zur Herstellung der erfindungsgemäßen Polyurethan-Hartschaumstoffe werden die Polyisocyanate A), die speziellen erfindungsgemäßen Polyesterpolyole B), gegebenenfalls die weiteren Polyesterpolyole C), die Polyetherole D) und die weiteren Komponenten E) bis H) in solchen Mengen vermischt, dass bei der Umsetzung das Äquivalenzverhältnis von NCO-Gruppen der Polyisocyanate A) zur Summe der reaktiven Wasserstoffatome der Komponenten B), gegebenenfalls C) sowie D) bis H), 1 bis 3,5:1, vorzugsweise 1 bis 2,5:1, bevorzugt 1,1 bis 2,1:1, besonders bevorzugt 1,2 bis 2,0:1, insbesondere 1,3 bis 1,9:1, spezifischer 1,4 bis 1,8:1 und im speziellen 1,4 bis 1,7:1 beträgt.

Das molare Verhältnis von NCO-Gruppen der Polyisocyanate A) zur Summe der reaktiven Wasserstoffatome der Komponenten B), gegebenenfalls C) sowie D) bis H) ist vorzugsweise größer als 1,0 : 1, bevorzugt größer 1,1 : 1 besonders bevorzugt größer 1,2 : 1, insbesondere größer 1,3 :1 und spezifisch größer 1,4 : 1.

Die Erfindung wird durch die nachstehenden Beispiele näher erläutert.

### Beispiele

Es wurden die nachstehenden Polyesterpolyole (Polyesterol 1, Polyesterol 3 und Polyesterol 5) bzw. Polyetheresterpolyole (Polyesterol 2, Polyesterol 4, Polyesterol 6 und Polyesterol 7) eingesetzt.

Polyesterol 1 (Vergleich): Veresterungsprodukt von Terephthalsäure (34 Mol-%), Ölsäure (9 Mol-%), Diethylenglykol (40 Mol-%) und Glyzerin (17 Mol-%) mit einer Hydroxylfunktionalität von 2,3, einer Hydroxylzahl von 244 mg KOH/g und einem Ölsäuregehalt im Polyesterol von 20 Gewichts-%.

Polyesterol 2 (erfindungsgemäß): Veresterungsprodukt von Terephthalsäure (31 Mol-%), Ölsäure (8 Mol-%), Diethylenglykol (43 Mol-%) und einem Polyether (18 Mol-%) auf Basis von Glyzerin und Ethylenoxid mit einer OH-Funktionalität von 3 und einer Hydroxylzahl von 546 mg KOH/g, hergestellt in Gegenwart von Imidazol als Alkoxylierungskatalysator. Dieser Polyether wurde aufarbeitungsfrei in der nachfolgenden Veresterung eingesetzt. Das Polyesterol weist eine Hydroxylfunktionalität von 2,3, eine Hydroxylzahl von 239 mg KOH/g und einen Ölsäuregehalt im Polyesterol von 15 Gewichts-% auf.

Polyesterol 3 (Vergleich): Veresterungsprodukt von Phthalsäureanhydrid (30 Mol-%), Ölsäure (12 Mol-%), Diethylenglykol (40 Mol-%) und Trimethylolpropan (18 Mol-%) mit einer Hydroxylfunktionalität von 2,2, einer Hydroxylzahl von 249 mg KOH/g und einem Ölsäuregehalt im Polyesterol von 25 Gewichts-%.

Polyesterol 4 (erfindungsgemäß): Veresterungsprodukt von Phthalsäureanhydrid (25 Mol-%), Ölsäure (15 Mol-%), Diethylenglykol (37 Mol-%) und einem Polyether (23 Mol-%) auf Basis Trimethylolpropan und Ethylenoxid mit einer OH-Funktionalität von 3 und einer Hydroxylzahl von 610 mg KOH/g, hergestellt in Gegenwart von KOH als Alkoxylierungskatalysator mit anschließender Neutralisation und Abtrennung des entstandenen Kaliumsalzes. Das Polyesterol weist eine Hydroxylfunktionalität von 2,2, eine Hydroxylzahl von 244 mg KOH/g und einen Ölsäuregehalt im Polyesterol von 24 Gewichts-% auf.

Polyesterol 5 (Vergleich): Veresterungsprodukt von Terephthalsäure (35 Mol-%), Ölsäure (7 Mol-%), Diethylenglykol (40 Mol-%) und Glyzerin (18 Mol-%) mit einer Hydroxylfunktionalität von 2,5, einer Hydroxylzahl von 256 mg KOH/g und einem Ölsäuregehalt im Polyesterol von 16 Gewichts-%.

Polyesterol 6 (erfindungsgemäß): Veresterungsprodukt von Terephthalsäure (29 Mol-%), Ölsäure (10 Mol-%), Diethylenglykol (36 Mol-%) und einem Polyether (25 Mol-%) auf Basis von Glyzerin und Ethylenoxid mit einer OH-Funktionalität von 3 und einer Hydroxylzahl von 535 mg KOH/g hergestellt in Gegenwart von KOH als Alkoxylierungskatalysator mit anschließender Neutralisation und Abtrennung des entstandenen Kaliumsalzes. Das Polyesterol weist eine Hydroxylfunktionalität von 2,5, eine Hydroxylzahl von 245 mg KOH/g und einen Ölsäuregehalt im Polyesterol von 15 Gewichts-% auf.

Polyesterol 7 (erfindungsgemäß): Veresterungsprodukt von Terephthalsäure (29 Mol-%), Ölsäure (10 Mol-%), Diethylenglykol (36 Mol-%) und einem Polyether (25 Mol-%) auf Basis von Glyzerin und Ethylenoxid mit einer OH-Funktionalität von 3 und einer Hydroxylzahl von 540 mg KOH/g hergestellt in Gegenwart von Imidazol als Alkoxylierungskatalysator. Dieser Polyether wurde aufarbeitungsfrei in der nachfolgenden Veresterung eingesetzt. Das Polyesterol weist eine Hydroxylfunktionalität von 2,5, eine Hydroxylzahl von 246 mg KOH/g und einen Ölsäuregehalt im Polyesterol von 15 Gewichts-% auf.

### Bestimmung von Härtung und Sprödigkeit des Polyurethan-Hartschaumstoffs

Die Härtung wurde mit dem Bolzentest ermittelt. Dazu wurde 2,5; 3; 4; 5; 6 und 7 Minuten nach Vermischung der Komponenten des Polyurethan-Schaumstoffs in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs.

Als Maß für die Sprödigkeit des Polyisocyanurat-Hartschaumstoffes wurde der Zeitpunkt ermittelt, bei dem die Oberfläche des Hartschaumstoffes beim Bolzentest sichtbare Bruchzonen aufwies (Bruch beim Bolzentest). Ferner wurde die Sprödigkeit direkt nach der Verschäumung durch Drücken des Schaums subjektiv bestimmt (Sprödigkeit subjektiv) und gemäß einem Notensystem von 1 bis 6 beurteilt. 1 bedeutet, dass der Schaum kaum spröde ist, 6 bedeutet, dass der Schaum eine hohe Sprödigkeit aufweist.

### Bestimmung der Eigenreaktivität der Polyurethansysteme

Die nachfolgend beschriebenen Polyurethansysteme wurden durch Variation der Polyurethan-Katalysatorkonzentration auf eine einheitliche Abbindezeit eingestellt. Wurde bei einem System eine geringere Katalysatorkonzentration benötigt, bedeutete dies, dass das System eine höhere Eigenreaktivität aufwies.
Bestimmung der Maßhaltigkeit

Zur Bestimmung der Maßhaltigkeit wird die Elementdicke nach der Verschäumung bestimmt. Hierfür wird ein Sandwichelement mit 0,05 mm dicker Aluminiumfolie als Deckschichtmaterial im Doppelbandverfahren hergestellt und 5 Minuten nach der Herstellung die Elementdicke in der Mitte des Elements bestimmt. Je näher die so bestimmte Elementdicke an der eingestellten Elementdicke (im vorliegenden Fall 170 mm) ist, desto besser ist die Maßhaltigkeit.

### Beispiele 1 und 2 sowie Vergleichsbeispiele 1 und 2

### Herstellung von Polyurethan-Hartschaumstoffen (Variante 1)

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 180 verschäumt.

Polyolkomponente:
30 Gewichtsteile Polyesterol gemäß Beispielen bzw. Vergleichsbeispielen;
36,5 Gewichtsteile Polyetherol mit einer OHZ von 490 mg KOH/g hergestellt durch Polyaddition von Propylenoxid an einer Saccharose/Glycerin-Mischung als Startermolekül und einer mittleren Funktionalität von 4,3;
6 Gewichtsteile Polyetherol aus ethoxyliertem Ethylenglykol mit einer Hydroxyfunktionalität von 2 und einer Hydroxyzahl von 190 mg KOH/g;
25 Gewichtsteile Flammschutzmittel Trischlorisopropylphosphat (TCPP); und
2,5 GewichtsteileStabilisator Niax Silicone L6635 (siliconhaltiger Stabilisator) von Fa. Momentive, sowie

Zusatzstoffe in der Polyolkomponente:
5,5 Gewichtsteile Pentan S 80:20 (bestehend aus 80 Gew.% n-Pentan und 20 Gew.-% Iso-Pentan)
ca. 2,2 Gewichtsteile Wasser; und
1,0 Gewichtsteile Kaliumacetat-Lösung (47 Gew.-% in Ethylenglykol).
Weiterhin Dimethylcyclohexylamin (DMCHA) zum Einstellen der Abbindezeiten, im Folgenden auch Katalysator 1 genannt.

Isocyanatkomponente:
180 Gewichtsteile Lupranat® M50 (polymeres Methylendiphenyldiisocyanat (PMDI), mit einer Viskosität von ca. 500 mPa*s bei 25 °C von BASF SE)

Die Komponenten wurden mittels eines Laborrührwerks intensiv vermischt. Die Rohdichte wurde dabei bei konstantem Pentangehalt von 5,5 Teilen durch Variation des Wassergehalts auf 41 +/- 1 g/L eingestellt. Die Abbindezeit wurde ferner auf 45 +/- 1 s durch Variation des Anteils des Dimethylcyclohexylamins (DMCHA) (Katalysator 1) eingestellt.

Die Ergebnisse sind in Tabelle 1 zusammengefasst.

**Tabelle 1:**

| | Polyesterol 1 (Vergleich) | Polyesterol 2 | Polyesterol 3 (Vergleich) | Polyesterol 4 |
|---|---|---|---|---|
| Härtung | | | | |
| 2,5 min | 45 | 47 | 44 | 47 |
| 3 min | 59 | 58 | 57 | 59 |
| 4 min | 84 | 83 | 80 | 81 |
| Summe (2,5; 3 und 4 min) | 188 | 188 | 181 | 187 |
| | | | | |
| Sprödigkeit (subjektiv) | 4,5 | 3 | 3,5 | 3 |
| Bruch beim Bolzentest | 6 min | kein Bruch | 7 min | kein Bruch |
| | | | | |
| Katalysator 1 | 1,6 | 1,4 | 1,6 | 1,5 |

Man erkennt dabei deutlich, dass die erfindungsgemäßen Polyesterpolyole 2 und 4 die Sprödigkeit des Dämmstoffs herabsenken und die Eigenreaktivität der Systeme erhöhen, ohne einen negativen Effekt auf die Schaumhärtung zu haben.

### Beispiele 3 und 4 sowie Vergleichsbeispiel 3

### Herstellung von Polyurethan-Hartschaumstoffen (Variante 2)

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 160 verschäumt.

Polyolkomponente:
30 Gewichtsteile Polyesterol gemäß Beispielen bzw. Vergleichsbeispielen;
37 Gewichtsteile Polyetherol mit einer OHZ von 490 mg KOH/g hergestellt durch Polyaddition von Propylenoxid an einer Saccharose/Glycerin-Mischung als Startermolekül und einer mittleren Funktionalität von 4,3;
6 Gewichtsteile Polyetherol aus ethoxyliertem Ethylenglykol mit einer Hydroxyfunktionalität von 2 und einer Hydroxyzahl von 190 mg KOH/g;
25 Gewichtsteile Flammschutzmittel Trischlorisopropylphosphat (TCPP); und
2 Gewichtsteile Stabilisator Niax Silicone L6635 (siliconhaltiger Stabilisator) von Fa. Momentive; sowie

Zusatzstoffe in der Polyolkomponente:
5,5 Gewichtsteile Pentan S 80:20;
ca. 1,8 Gewichtsteile Wasser; und
1,2 GewichtsteileKaliumacetat-Lösung (47 Gew.-% in Ethylenglykol).

Weiterhin ca. 0,9 Gewichtsteile Dimethylcyclohexylamin (DMCHA) zum Einstellen der Abbindezeit.

Isocyanatkomponente:
160 Gewichtsteile Lupranat® M50

Es wurden 170 mm dicke Sandwichelemente nach dem Doppelbandverfahren hergestellt. Die Rohdichte wurde dabei bei konstantem Pentangehalt von 5,5 Teilen durch Variation des Wassergehalts auf 38 +/- 1 g/L eingestellt. Die Abbindezeit wurde ferner auf 35 +/- 1 s durch Variation des Anteils des Dimethylcyclohexylamins eingestellt.

Die Ergebnisse sind in Tabelle 2 zusammengefasst.

**Tabelle 2: Ergebnisse der Versuche zur Herstellung von 170 mm dicken Sandwichelementen nach dem Doppelbandverfahren**

| Polyesterpolyol: | Polyesterol 5 (Vergleich) | Polyesterol 6 | Polyesterol 7 |
|---|---|---|---|
| Elementdicke nach Verschäumung | 186 mm | 180 mm | 180 mm |

Man erkennt dabei deutlich, dass die erfindungsgemäßen Polyesterpolyole 6 und 7 die Maßhaltigkeit des Polyurethanhartschaumstoffs verbessern.

## Patentansprüche

1. Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von
b1) 10 bis 70 Mol-% einer Dicarbonsäurezusammensetzung, enthaltend
b11) 50 bis 100 Mol-%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäurezusammensetzung b1), einer oder mehrerer aliphatischer Dicarbonsäuren oder Derivate derselben,
b2) 2 bis 30 Mol-% einer oder mehrerer Fettsäuren oder Fettsäurederivate,
b3) 10 bis 70 Mol-% eines oder mehrerer aliphatischer oder cycloaliphatischer Diole mit 2 bis 18 C-Atomen oder Alkoxylate derselben,
b4) 2 bis 50 Mol-% eines Polyetherpolyols mit einer Funktionalität größer oder gleich 2, hergestellt durch Alkoxylierung eines Polyols mit einer Funktionalität größer 2,
jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unterscheiden,
D) Polyetherpolyolen,
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) kleiner 1,6 ist.

2. Verfahren nach Anspruch 1, **dadurch gekennzeichnet, dass** das Massenverhältnis der Summe der Komponenten B) und C) zu Komponente D) größer 0,1 ist.

3. Verfahren nach einem der Ansprüche 1 oder 2, **dadurch gekennzeichnet, dass** der Anteil der Polyetheresterpolyole B) an der Gesamtmenge der Polyesterpolyole B) und C) mindestens 25 Gew.-% beträgt.

4. Verfahren nach einem der Ansprüche 1 bis 3, **dadurch gekennzeichnet, dass** keine weiteren Polyesterpolyole C) mit umgesetzt werden.

5. Verfahren nach einem der Ansprüche 1 bis 4, **dadurch gekennzeichnet, dass** das Polyetherpolyol b4) eine Funktionalität von > 2 aufweist.

6. Verfahren nach einem der Ansprüche 1 bis 5, **dadurch gekennzeichnet, dass** das Polyetherpolyol b4) hergestellt ist durch Alkoxylierung eines Polyols, ausgewählt aus der Gruppe bestehend aus Sorbit, Pentaerythrit, Trimethylolpropan, Glycerin, Polyglycerin und deren Gemischen.

7. Verfahren nach einem der Ansprüche 1 bis 6, **dadurch gekennzeichnet, dass** der Polyetheralkohol b4) durch Alkoxylierung mit Ethylenoxid hergestellt ist.

8. Verfahren nach einem der Ansprüche 1 bis 7, **dadurch gekennzeichnet, dass** das Polyetherpolyol b4) durch Alkoxylierung mit Ethylenoxid in Gegenwart eines aminischen Alkoxylierungskatalysators hergestellt ist.

9. Verfahren nach einem der Ansprüche 1 bis 8, **dadurch gekennzeichnet, dass** die Komponente b11) ein oder mehrere Verbindungen, ausgewählt aus der Gruppe bestehend aus Terephthalsäure, Dimethylterephthalat, Polyethylenterephthalat, Phthalsäure, Phthalsäureanhydrid und Isopththalsäure, enthält.

10. Verfahren nach einem der Ansprüche 1 bis 9, **dadurch gekennzeichnet, dass** die Dicarbonsäurezusammensetzung b1) keine aliphatischen Dicarbonsäuren b12) enthält.

11. Verfahren nach einem der Ansprüche 1 bis 10, **dadurch gekennzeichnet, dass** die Fettsäure oder das Fettsäurederivat b2) ausgewählt ist aus der Gruppe bestehend aus Ölsäure und Ölsäuremethylester.

12. Verfahren nach einem der Ansprüche 1 bis 11, **dadurch gekennzeichnet, dass** die aliphatischen oder cycloaliphatischen Diole b3) ausgewählt sind aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

13. Verfahren nach einem der Ansprüche 1 bis 12, **dadurch gekennzeichnet, dass** die Polyetherol-Komponente D) aus einem Polyetherol-Gemisch besteht, in der ein Teil der Polyetherolkomponente D) auf Basis von Propylenoxid hergestellt wurde (Polyetherolkomponente D1) und der restliche Teil der Polyetherolkomponente D) auf Basis von Ethylenoxid hergestellt wurde (Polyetherolkomponente D2).

14. Verfahren nach einem der Ansprüche 1 bis 13, **dadurch gekennzeichnet, dass** die Polyetherolkomponente D1) eine mittlere OH-Funktionalität von größer 3, bevorzugt größer 3,5, besonders bevorzugt größer 4 und eine OH-Zahl größer 300 mg KOH/g bevorzugt größer 350 mg KOH/g, besonders bevorzugt größer 400 mg KOH/g und speziell größer 450 mg KOH/g aufweist.

15. Verfahren nach einem der Ansprüche 1 bis 14, **dadurch gekennzeichnet, dass** die Polyetherolkomponente D1) eine mittlere OH-Funktionalität von kleiner 6, bevorzugt kleiner 5,5, besonders bevorzugt kleiner 5 und eine OH-Zahl kleiner 600 mg KOH/g bevorzugt kleiner 550 mg KOH/g, besonders bevorzugt kleiner 500 mg KOH/g aufweist.

16. Polyurethan-Hartschaumstoff oder Polyisocyanurat-Hartschaumstoff, erhältlich nach dem Verfahren gemäß einem der Ansprüche 1 bis 15.

17. Verwendung der Polyurethan-Hartschaumstoffe oder Polyisocyanurat-Hartschaumstoffe gemäß Anspruch 16 zur Herstellung von Sandwichelementen mit starren oder flexiblen Deckschichten.

18. Polyolkomponente enthaltend
10 bis 50 Gew.-% der Polyesterpolyole B),
0 bis 30 Gew.-% der weiteren Polyesterpoylole C),
25 bis 55 Gew.-% der Polyetherpolyole D),
10 bis 40 Gew.-% Flammschutzmittel E),
1 bis 30 Gew.-% Treibmittel F),
0,5 bis 10 Gew.-% Katalysatoren G), und
0 bis 20 Gew.-% weitere Hilfs und Zusatzstoffe H),
die Komponenten B) bis H) wie in den Ansprüchen 1 bis 15 definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) kleiner 1,6 ist.

## Claims

1. A process for preparing rigid polyurethane foams or rigid polyisocyanurate foams comprising the reaction of
A) at least one polyisocyanate,
B) at least one polyetherester polyol obtainable by esterification of
b1) 10 to 70 mol% of a dicarboxylic acid composition comprising
b11) 50 to 100 mol%, based on the dicarboxylic acid composition, of one or more aromatic dicarboxylic acids or derivatives thereof,
b12) 0 to 50 mol%, based on said dicarboxylic acid composition b1), of one or more aliphatic dicarboxylic acids or derivatives thereof,
b2) 2 to 30 mol% of one or more fatty acids or fatty acid derivatives,
b3) 10 to 70 mol% of one or more aliphatic or cycloaliphatic diols having 2 to 18 carbon atoms or alkoxylates thereof,
b4) 2 to 50 mol% of a polyether polyol having a functionality of not less than 2, prepared by alkoxylation of a polyol having a functionality of above 2,
all based on the total amount of components b1) to b4), wherein said components b1) to b4) sum to 100 mol%,
C) optionally further polyester polyols other than those of component B),
D) polyether polyols,
E) optionally flame retardants,
F) one or more blowing agents,
G) catalysts, and
H) optionally further auxiliaries or addition agents,
wherein the mass ratio of total components B) and optionally C) to component D) is less than 1.6.

2. The process according to claim 1 wherein the mass ratio of total components B) and C) to component D) is above 0.1.

3. The process according to either claim 1 or 2 wherein the proportion of total polyester polyols B) and C) which is attributable to polyetherester polyols B) is at least 25 wt%.

4. The process according to any one of claims 1 to 3 wherein no further polyester polyols C) are reacted.

5. The process according to any one of claims 1 to 4 wherein said polyether alcohol b4) has a functionality of > 2.

6. The process according to any one of claims 1 to 5 wherein said polyether polyol b4) is prepared by alkoxylating a polyol selected from the group consisting of sorbitol, pentaerythritol, trimethylolpropane, glycerol, polyglycerol and mixtures thereof.

7. The process according to any one of claims 1 to 6 wherein said polyether alcohol b4) is prepared by alkoxylation with ethylene oxide.

8. The process according to any one of claims 1 to 7 wherein said polyether polyol b4) is prepared by alkoxylation with ethylene oxide in the presence of an aminic alkoxylation catalyst.

9. The process according to any one of claims 1 to 8 wherein said component b11) comprises one or more compounds selected from the group consisting of terephthalic acid, dimethyl terephthalate, polyethylene terephthalate, phthalic acid, phthalic anhydride and isophthalic acid.

10. The process according to any one of claims 1 to 9 wherein said dicarboxylic acid composition b1) comprises no aliphatic dicarboxylic acids b12).

11. The process according to any one of claims 1 to 10 wherein said fatty acid or fatty acid derivative b2) is selected from the group consisting of oleic acid and methyl oleate.

12. The process according to any one of claims 1 to 11 wherein said aliphatic or cycloaliphatic diols b3) are selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

13. The process according to any one of claims 1 to 12 wherein said polyetherol component D) consists of a polyetherol mixture in which some of polyetherol component D) was prepared on the basis of propylene oxide (polyetherol component D1) and the remainder of polyetherol component D) was prepared on the basis of ethylene oxide (polyetherol component D2).

14. The process according to any one of claims 1 to 13 wherein said polyetherol component D1) has an average OH functionality of above 3, preferably above 3.5 and more preferably above 4 and an OH number above 300 mg KOH/g preferably above 350 mg KOH/g, more preferably above 400 mg KOH/g and specifically above 450 mg KOH/g.

15. The process according to any one of claims 1 to 14 wherein said polyetherol component D1) has an average OH functionality of below 6, preferably below 5.5 and more preferably below 5 and an OH number below 600 mg KOH/g preferably below 550 mg KOH/g and more preferably below 500 mg KOH/g.

16. A rigid polyurethane or polyisocyanurate foam obtainable by the process according to any one of claims 1 to 15.

17. The use of the rigid polyurethane or polyisocyanurate foam according to claim 16 for preparing sandwich elements having rigid or flexible outer layers.

18. A polyol component comprising
10 to 50 wt% of polyester polyols B),
0 to 30 wt% of further polyester poylols C),
25 to 55 wt% of polyether polyols D),
10 to 40 wt% of flame retardants E),
1 to 30 wt% of blowing agents F),
0.5 to 10 wt% of catalysts G), and
0 to 20 wt% of further auxiliary and addition agents H),
said components B) to H) as defined in claims 1 to 15 and each based on the total weight of components B) to H), wherein the wt% add up to 100 wt%, and wherein the mass ratio of total components B) and C) to component D) is less than 1.6.

## Revendications

1. Procédé de fabrication de mousses dures de polyuréthane ou de mousses dures de polyisocyanurate comprenant la mise en réaction de
A) au moins un polyisocyanate,
B) au moins un polyétherester-polyol, pouvant être obtenu par estérification de
b1) 10 à 70 % en moles d'une composition d'acide dicarboxylique, contenant
b11) 50 à 100 % en moles, par rapport à la composition d'acide dicarboxylique, d'un ou de plusieurs acides dicarboxyliques aromatiques ou leurs dérivés,
b12) 0 à 50 % en moles, par rapport à la composition d'acide dicarboxylique b1), d'un ou de plusieurs acides dicarboxyliques aliphatiques ou leurs dérivés,
b2) 2 à 30 % en moles d'un ou de plusieurs acides gras ou dérivés d'acides gras,
b3) 10 à 70 % en moles d'un ou de plusieurs diols aliphatiques ou cycloaliphatiques contenant 2 à 18 atomes C ou leurs alcoxylates,
b4) 2 à 50 % en moles d'un polyéther-polyol d'une fonctionnalité supérieure ou égale à 2, fabriqué par alcoxylation d'un polyol d'une fonctionnalité supérieure à 2,
à chaque fois par rapport à la quantité totale des composants b1) à b4), la somme des composants b1) à b4) étant de 100 % en moles,
C) éventuellement des polyester-polyols supplémentaires, qui diffèrent du composant B),
D) des polyéther-polyols,
E) éventuellement des agents ignifuges,
F) un ou plusieurs agents gonflants,
G) des catalyseurs et
H) éventuellement d'autres adjuvants ou additifs,
le rapport en masse entre la somme des composants B) et éventuellement C) et le composant D) étant inférieur à 1, 6.

2. Procédé selon la revendication 1, **caractérisé en ce que** le rapport en masse entre la somme des composants B) et C) et le composant D) est supérieur à 0, 1.

3. Procédé selon l'une quelconque des revendications 1 ou 2, **caractérisé en ce que** la proportion des polyétherester-polyols B) par rapport à la quantité totale des polyester-polyols B) et C) est d'au moins 25 % en poids.

4. Procédé selon l'une quelconque des revendications 1 à 3, **caractérisé en ce qu'**aucun polyester-polyol supplémentaire C) n'est mis en réaction.

5. Procédé selon l'une quelconque des revendications 1 à 4, **caractérisé en ce que** le polyéther-polyol b4) présente une fonctionnalité > 2.

6. Procédé selon l'une quelconque des revendications 1 à 5, **caractérisé en ce que** le polyéther-polyol b4) est fabriqué par alcoxylation d'un polyol, choisi dans le groupe constitué par le sorbitol, le pentaérythritol, le triméthylolpropane, la glycérine, la polyglycérine et leurs mélanges.

7. Procédé selon l'une quelconque des revendications 1 à 6, **caractérisé en ce que** le polyéther-alcool b4) est fabriqué par alcoxylation avec de l'oxyde d'éthylène.

8. Procédé selon l'une quelconque des revendications 1 à 7, **caractérisé en ce que** le polyéther-polyol b4) est fabriqué par alcoxylation avec de l'oxyde d'éthylène en présence d'un catalyseur d'alcoxylation aminé.

9. Procédé selon l'une quelconque des revendications 1 à 8, **caractérisé en ce que** le composant b11) contient un ou plusieurs composés, choisis dans le groupe constitué par l'acide téréphtalique, le téréphtalate de diméthyle, le téréphtalate de polyéthylène, l'acide phtalique, l'anhydride de l'acide phatique et l'acide isophtalique.

10. Procédé selon l'une quelconque des revendications 1 à 9, **caractérisé en ce que** la composition d'acide dicarboxylique b1) ne contient pas d'acides dicarboxyliques aliphatiques b12).

11. Procédé selon l'une quelconque des revendications 1 à 10, **caractérisé en ce que** l'acide gras ou le dérivé d'acide gras b2) est choisi dans le groupe constitué par l'acide oléique et l'ester méthylique de l'acide oléique.

12. Procédé selon l'une quelconque des revendications 1 à 11, **caractérisé en ce que** les diols aliphatiques ou cycloaliphatiques b3) sont choisis dans le groupe constitué par l'éthylène glycol, le diéthylène glycol, le propylène glycol, le 1,3-propanediol, le 1,4-butanediol, le 1,5-pentanediol, le 1,6-hexanediol, le 2-méthyl-1,3-propanediol et le 3-méthyl-1,5-pentanediol, et leurs alcoxylates.

13. Procédé selon l'une quelconque des revendications 1 à 12, **caractérisé en ce que** le composant polyéthérol D) est constitué d'un mélange de polyéthérols, une partie du composant polyéthérol D) ayant été fabriqué à base d'oxyde de propylène (composant polyéthérol D1) et la partie restante du composant polyéthérol D) ayant été fabriquée à base d'oxyde d'éthylène (composant polyéthérol D2).

14. Procédé selon l'une quelconque des revendications 1 à 13, **caractérisé en ce que** le composant polyéthérol D1) présente une fonctionnalité OH moyenne supérieure à 3, de préférence supérieure à 3,5, de manière particulièrement préférée supérieure à 4, et un indice OH supérieur à 300 mg KOH/g, de préférence supérieur à 350 mg KOH/g, de manière particulièrement préférée supérieur à 400 mg KOH/g et notamment supérieur à 450 mg KOH/g.

15. Procédé selon l'une quelconque des revendications 1 à 14, **caractérisé en ce que** le composant polyéthérol D1) présente une fonctionnalité OH moyenne inférieure à 6, de préférence inférieure à 5,5, de manière particulièrement préférée inférieure à 5, et un indice OH inférieur à 600 mg KOH/g, de préférence inférieur à 550 mg KOH/g, de manière particulièrement préférée inférieur à 500 mg KOH/g.

16. Mousse dure de polyuréthane ou mousse dure de polyisocyanurate, pouvant être obtenue par le procédé selon l'une quelconque des revendications 1 à 15.

17. Utilisation de la mousse dure de polyuréthane ou de la mousse dure de polyisocyanurate selon la revendication 16 pour la fabrication d'éléments en sandwich à couches supérieures rigides ou flexibles.

18. Composant polyol contenant :
10 à 50 % en poids des polyester-polyols B),
0 à 30 % en poids des polyester-polyols supplémentaires C),
25 à 55 % en poids des polyéther-polyols D),
10 à 40 % en poids des agents ignifuges E),
1 à 30 % en poids des agents gonflants F),
0,5 à 10 % en poids des catalyseurs G) et
0 à 20 % en poids d'adjuvants et additifs supplémentaires H),
les composants B) à H) étant tels que définis dans les revendications 1 à 15 et à chaque fois par rapport au poids total des composants B) à H), la somme des % en poids étant de 100 % en poids, et le rapport en masse entre la somme des composants B) et C) et le composant D) étant inférieur à 1,6.
